# FASCICULE DE BREVET EUROPEEN

(11) **EP 3 004 709 B1**
(45) Date de publication et mention de la délivrance du brevet: **19.04.2017**
(21) Numéro de dépôt: 14726375.0
(22) Date de dépôt: 27.05.2014
(51) Int. Cl.: F16L 11/08, F16L 33/01, F16L 11/12, F16L 11/20

(54) **CONDUITE FLEXIBLE DE TRANSPORT DE FLUIDE, UTILISATION ET PROCÉDÉ ASSOCIÉS**
FLEXIBLE LEITUNG ZUR FÖRDERUNG EINES FLUIDS, VERWENDUNG DAVON UND VERFAHREN
FLEXIBLE DUCT FOR CONVEYING A FLUID, AND RELATED USE AND METHOD

(30) Priorité: 29.05.2013 FR 1354876
(43) Date de publication de la demande: 13.04.2016
(73) Titulaire: Technip France, 92400 Courbevoie (FR)
(72) Inventeur: DAMIENS, Alexandre, F-76560 Berville (FR); LECOINTE, Edouard, 2081-042 Rj Rio De Janeiro (BR)
(74) Mandataire: Lavoix
(86) Numéro de dépôt international: PCT/EP2014/060918
(87) Numéro de publication internationale: WO 2014/191393

(56) Documents cités:
- EP-A1- 0 937 933
- WO-A1-2010/067092
- WO-A1-2011/026801
- FR-A1- 2 852 658
- FR-A1- 2 915 552

## Description

La présente invention concerne une conduite flexible de transport de fluide, selon le préambule de la revendication 1

La conduite est en particulier une conduite flexible de type non liée (« unbonded ») destinée au transport d'un fluide à travers une étendue d'eau, tel qu'un océan, une mer, un lac ou une rivière.

Une telle conduite flexible est par exemple réalisée suivant les documents normatifs API 17J (Specification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite.

En particulier, une conduite non liée est une conduite dépourvue de matériaux liants raccordant des couches formant la conduite.

D'une manière connue, une telle conduite comporte une structure interne tubulaire comprenant au moins une gaine de pression. La conduite comporte des nappes d'armures de traction disposées autour de la structure interne tubulaire.

La conduite comporte en outre, dans certains cas, une voûte de pression, formée d'au moins un fil agrafé présentant par exemple un profil en T ou un profil en Z. Une frette peut également être enroulée en spirale autour de la voûte de pression.

Un exemple de conduite du type précité est décrit dans WO 2011/026801 ou dans FR2915552. Cette conduite comporte en outre un fluide de protection reçu entre la gaine interne et la gaine externe. Le fluide de protection empêche la corrosion des nappes d'armures intermédiaires. Il est maintenu à une pression atmosphérique.

Les conduites du type précité sont généralement disposées à travers une étendue d'eau, entre un ensemble de fond, destiné à recueillir le fluide exploité dans le fond de l'étendue d'eau et un ensemble de surface flottant ou non-flottant destiné à collecter et à distribuer le fluide. L'ensemble de surface peut être une plateforme semi-submersible, un FPSO, une plateforme fixe, une tour flexible, une plateforme à lignes tendues ou tout autre ensemble flottant ou non-flottant.

Dans certains cas, la conduite est utilisée pour réinjecter dans le fond de l'étendue d'eau, un fluide présent à la surface, par exemple un gaz sous pression. Ceci est le cas notamment pour les gisements comprenant des hydrocarbures riches en dioxyde de carbone. Le dioxyde de carbone est séparé des hydrocarbures en surface et est réinjecté sous pression dans le réservoir, afin d'éviter la dissémination du dioxyde de carbone dans l'atmosphère.

Dans certains cas, pour l'exploitation de fluides en eaux profondes, la conduite flexible présente une longueur supérieure à 200 m. Par ailleurs, la pression différentielle nécessaire pour la réinjection de fluide dans le réservoir peut être très élevée, par exemple supérieure à 400 bars, voire supérieure à 700 bars. En outre, la pression absolue régnant en partie basse (ou « bottom » en anglais) de la conduite flexible, combinaison d'une pression de fluide très élevée en tête de conduite et de la pression hydrostatique exercée, peut être très élevée, par exemple de l'ordre de 1300 bars.

Lors du transport des fluides à très haute pression, les conduites de construction classique du type précité peuvent être limitées, particulièrement pour une utilisation en application dynamique.

En effet, des phénomènes de fatigue et plus particulièrement de fatigue par usure de contact (ou « fatigue-fretting » en anglais) peuvent apparaître sur la voûte de pression et sur la frette en spirale.

Cette fatigue altère les propriétés mécaniques de la conduite et nuit à sa longévité. Un but de l'invention est donc de disposer d'une conduite flexible de transport de fluide, propre à convoyer un fluide à très haute pression et qui soit néanmoins très résistante dans le temps pour des applications dynamiques.

À cet effet, l'invention a pour objet une conduite selon la revendication 1.

La conduite selon l'invention peut comprendre l'une ou plusieurs des caractéristiques des revendications 2 à 13, prise isolément ou suivant toute combinaison techniquement possible.

L'invention a également pour objet l'utilisation selon la revendication 14 L'invention a aussi pour objet un procédé selon la revendication 15

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une conduite flexible selon l'invention ;
- la figure 2 est une vue schématique partielle, prise en coupe suivant un plan transversal de la conduite de la figure 1 ;
- la figure 3 est une vue schématique partielle, prise en coupe suivant un plan axial médian d'un détail de la conduite de la figure 1, illustrant l'espace annulaire interne pressurisé de la conduite ;
- la figure 4 est une vue schématique partielle, prise en coupe suivant un plan axial médian de la conduite de la figure 1, illustrant le sertissage de l'espace annulaire interne pressurisé de la conduite.

Dans tout ce qui suit, les termes « extérieur » ou « extérieurement » et « intérieur » ou « intérieurement » s'entendent généralement de manière radiale par rapport à un axe A-A' de la conduite, le terme « extérieur » s'entendant comme relativement plus éloigné radialement de l'axe A-A' et le terme « intérieur » s'entendant comme relativement plus proche radialement de l'axe A-A' de la conduite.

Par ailleurs, les termes « amont » et « aval » s'entendent généralement par rapport au sens normal de circulation d'un fluide pétrolier au sein de la conduite.

Les pressions mentionnées sont des pressions différentielles, sauf indication contraire. Les pressions mentionnées doivent s'interpréter en particulier par rapport à la description d'une conduite particulière de diamètre interne égal à 152 mm (6"), prise en considération pour illustrer la structure et les performances de la conduite de l'invention.

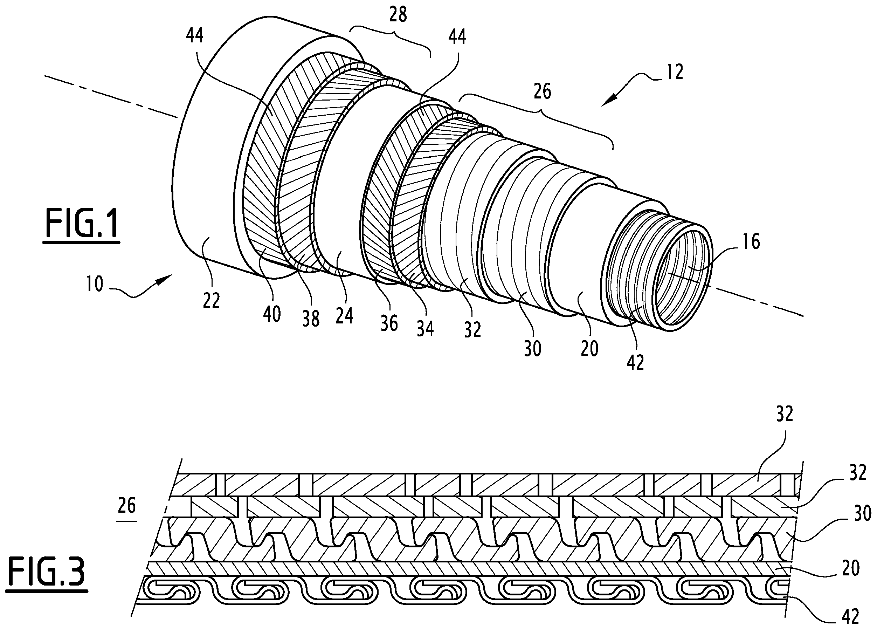

Une première conduite flexible 10 selon l'invention, est illustrée partiellement par les figures 1 à 3.

La conduite flexible 10 comporte un tronçon central 12 illustré en partie sur la figure 1. Elle comporte, à chacune des extrémités axiales du tronçon central 12, un embout d'extrémité (non représenté).

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts.

Le diamètre du passage central 16 est avantageusement compris entre 50 mm (2") et 500 mm (20").

Le fluide convoyé par la conduite est par exemple un gaz ou un liquide extrait du sous-sol, ou réinjecté dans celui-ci. Dans une application particulière, le fluide est un gaz riche en dioxyde de carbone (par exemple contenant plus de 1% molaire en dioxyde de carbone), destiné à être réinjecté dans le sous-sol, avantageusement au fond d'une étendue d'eau.

La pression du fluide circulant dans la conduite est par exemple supérieure à 400 bars, notamment supérieure à 700 bars et est avantageusement comprise entre 900 bars et 1100 bars.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 3000 m.

L'installation d'exploitation de fluide comporte un ensemble de surface, généralement flottant, et un ensemble de fond (non représenté) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

Selon l'invention, la conduite 10 comporte au moins une première gaine 20 à base de matériau polymère constituant une gaine de pression. La conduite 10 comprend une deuxième gaine externe 22, destinée à la protection de la conduite 10 et, selon l'invention, une gaine intermédiaire 24 étanche interposée entre la gaine interne 20 et la gaine externe 22.

La gaine intermédiaire 24 définit avec la gaine interne 20, un espace annulaire interne 26 destiné à être pressurisé par un fluide interne. Elle définit avec la gaine externe 22 un espace annulaire externe 28 de renfort de la gaine intermédiaire 24.

Dans l'espace annulaire interne 26, la conduite 10 comporte une voûte de pression 30, et optionnellement une frette interne 32 enroulée autour de la voûte de pression 30.

La conduite 10 comporte en outre, dans l'espace annulaire interne 26, une pluralité de couches d'armures de traction 34, 36 internes disposées extérieurement par rapport à la voûte de pression 30 et par rapport à la frette 32.

Dans l'espace annulaire externe 28, la conduite 10 comporte une pluralité de couches d'armures de traction 38, 40 disposées extérieurement autour de la gaine intermédiaire 24. Selon une variante de réalisation de l'invention, les couches d'armures de traction 38, 40 sont remplacées par une voûte de pression formée à partir d'un fil profilé en métal présentant une géométrie en forme de T, de U, de K, de X ou de I, et/ou à partir d'au moins une bande en aramide à résistance mécanique élevée (Technora® ou Kevlar®), et/ou à partir d'au moins une bande composite comprenant une matrice thermoplastique dans laquelle sont noyées des fibres de carbone ou des fibres de verre.

De préférence, la conduite 10 comporte en outre une carcasse interne 42 disposée à l'intérieur de la gaine interne 20.

La carcasse 42, lorsqu'elle est présente, est formée par exemple d'un feuillard métallique profilé, enroulé en spirale. Comme illustré par la figure 3, les spires du feuillard sont avantageusement agrafées les unes aux autres, ce qui permet de reprendre les efforts radiaux d'écrasement.

L'enroulement hélicoïdal du feuillard métallique profilé formant la carcasse 42 est à pas court, c'est-à-dire qu'il présente un angle d'hélice de valeur absolue proche de 90°, typiquement compris entre 75° et 90°.

Dans cet exemple, la carcasse 42 est disposée à l'intérieur de la gaine interne 20.

La conduite est alors désignée par le terme anglais « rough bore » en raison de la géométrie de la carcasse 42

En variante (non représentée), la conduite flexible 10 est dépourvue de carcasse interne 42, elle est alors désignée par le terme anglais « smooth bore ».

De manière connue, la gaine interne 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine interne 20 est par exemple comprise entre 5 mm et 20 mm.

Dans cet exemple, la voûte de pression 30 est destinée à reprendre les efforts liés à la pression régnant à l'intérieur de la gaine interne 20. Elle est par exemple formée d'un fil profilé métallique entouré en hélice autour de la gaine 20. Le fil profilé présente de préférence une géométrie, notamment en forme de Z. La géométrie en Z permet d'améliorer la résistance mécanique générale de la conduite 10 et permet aussi de réduire sa masse.

En variante, le fil profilé présente une géométrie en forme de T, de U, de K, de X ou de I.

La voûte de pression 30 est enroulée en hélice à pas court autour de la gaine interne 20, c'est-à-dire avec un angle d'hélice de valeur absolue proche de 90°, typiquement compris entre 75° et 90°.

La frette 32 est constituée par un enroulement en spirale d'au moins un fil avantageusement de section transversale rectangulaire autour de la voûte de pression 30.

La superposition de plusieurs fils enroulés autour de la voûte de pression 30 peut avantageusement remplacer une épaisseur totale de frette 32 donnée. Ceci permet d'augmenter la résistance à l'éclatement de la conduite 10, mais également de diminuer le risque de fatigue par frottement. L'enroulement du au moins un fil est à pas court, c'est-à-dire avec un angle d'hélice de valeur absolue proche de 90°, typiquement compris entre 75° et 90°.

Dans une variante de réalisation de l'invention, la voûte de pression 30 et la frette 32 sont remplacées par une voûte de pression d'épaisseur plus importante formée à partir d'un fil profilé en métal présentant une géométrie en forme de T, de U, de K, de X ou de I, et/ou à partir d'au moins une bande en aramide à résistance mécanique élevée (Technora® ou Kevlar®), et/ou à partir d'au moins une bande composite comprenant une matrice thermoplastique dans laquelle sont noyées des fibres de carbone ou des fibres de verre.

Dans l'exemple représenté sur la figure 1, la conduite flexible 10 comporte au moins une paire de couches d'armures internes 34, 36, dont une est représentée sur la figure 1.

En variante, la conduite flexible 10 comporte plusieurs paires de couches d'armures internes 34, 36 superposées les unes sur les autres, par exemple deux paires de couches d'armures internes 34, 36.

Chaque paire comporte une première couche d'armures internes 34 appliquée sur la frette 32 ou sur une autre paire de couches d'armures internes, et une deuxième couche d'armures internes 36, disposée autour de la première couche d'armures internes 34.

Chaque couche d'armures internes 34, 36 comporte au moins un élément d'armure 44 longitudinal enroulé à pas long autour de l'axe A-A' de la conduite 10.

Par « enroulé à pas long », on entend que la valeur absolue de l'angle d'hélice est inférieure à 60°, et est typiquement comprise entre20° et 60°.

Dans l'exemple représenté sur la figure 1, la valeur absolue de l'angle d'hélice de chaque couche d'armures internes 34, 36 est inférieure à 45°, et est notamment comprise entre 20° et 30°, et est environ égale à 25°.

Les éléments d'armure 44 d'une première couche 34 sont enroulés généralement suivant un angle opposé par rapport aux éléments d'armure 44 d'une deuxième couche 36. Ainsi, si l'angle d'enroulement des éléments d'armure 44 de la première couche 34 est égal à + α, α étant compris entre 20° et 60°, l'angle d'enroulement des éléments d'armure 44 de la deuxième couche 36 disposée au contact de la première couche 34 est par exemple de - α, avec α compris entre 20° et 60°.

Les éléments d'armure 44 sont par exemple formés par des fils métalliques ou en matériau composite, ou par des rubans à résistance mécanique élevée.

Dans cet exemple, chaque couche d'armures 34, 36 repose sur au moins une bande anti-usure. La bande anti-usure est par exemple réalisée en plastique, notamment à base d'un polyamide ou d'un polyfluorure de vinylidène (PVDF). Elle présente une épaisseur inférieure à l'épaisseur de chaque gaine 20, 22, 24.

La gaine intermédiaire 24 est destinée à confiner le fluide interne sous pression dans l'espace annulaire interne 26. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine intermédiaire 24 est par exemple comprise entre 5 mm et 15 mm.

Le fluide interne est reçu de manière étanche dans l'espace annulaire interne 26. Il présente une pression supérieure à 50 bars, avantageusement supérieure à 200 bars, et notamment comprise entre 200 bars et 400 bars.

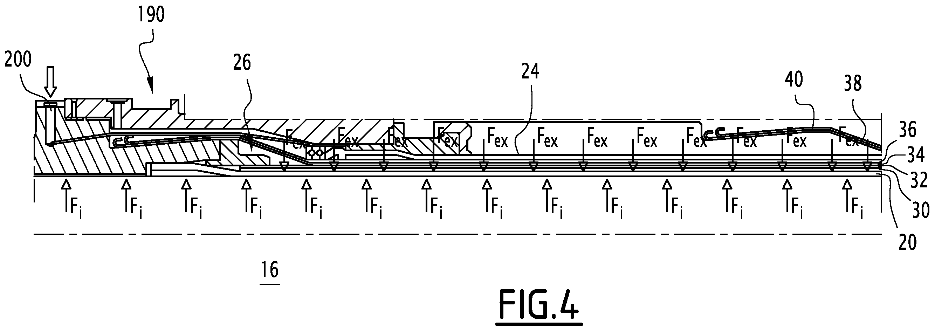

Il est introduit dans l'espace annulaire interne 26 avantageusement à travers un canal 200 ménagé dans un embout d'extrémité, plus précisément en partie haute (ou « top » en anglais) de la conduite 10. Un exemple de canal 200 est visible sur la figure 4.

Le fluide interne est avantageusement un liquide, donc la pression est plus facilement contrôlable, tel qu'une huile, un hydrocarbure, notamment l'hexane, un liquide de protection comprenant par exemple un glycol, notamment le mono éthylène glycol, le liquide de protection comprenant avantageusement un alcool. En variante, le fluide interne est un gaz neutre, tel que l'azote.

En outre, le fluide interne permet de protéger les couches de renforcement métalliques 30, 32, 34, 36 de l'annulaire 26.

Le liquide présente de préférence une densité proche de celle de l'eau de mer. Comme on le verra plus bas, la présence du fluide interne sous pression, confiné par la gaine intermédiaire 24 applique une contre-pression sur la gaine interne 20.

Ceci diminue considérablement les contraintes axiales subies par la voûte de pression 30 et la frette 32, ainsi que les contraintes radiales de pression de contact s'exerçant à l'interface entre les couches 30 et 32.

Ainsi, les phénomènes de fatigue et de fatigue par usure de contact s'en trouvent significativement réduits, de manière générale, au sein de l'espace annulaire interne 26, même lorsque la pression du fluide circulant dans le passage central 16 est élevée, par exemple lorsqu'elle est supérieure à 400 bars, notamment supérieure à 700 bars.

En outre, le fluide interne sous pression permet de repousser de façon significative les limites des capacités actuelles en terme de pression interne acceptable par les conduites flexibles sous-marines du type non liée.

Avantageusement, lorsque la voûte de pression 30 est formée avec des fils de profil en Z, ce phénomène est encore réduit.

Ainsi et de manière avantageuse, comme la contre-pression exercée par le fluide interne présent dans l'espace annulaire interne 26 compense la pression du fluide d'hydrocarbures exercée sur la gaine interne 20, la pression de service peut être significativement augmentée, au sein du passage central 16.

En outre, si la pression du fluide d'hydrocarbure circulant au sein du passage central 16 est maintenue à une pression de service donnée, la contre-pression exercée sur la gaine de pression 30 compense de manière significative la pression de service. Cela permet ainsi de réduire les dimensions des fils utilisés pour former la voûte de pression et donc de diminuer la masse de la conduite flexible 10.

Préférentiellement, l'utilisation d'une frette 32 comprenant plus de deux fils enroulés à pas court autour de la voûte de pression 30 réduit le phénomène de fatigue par usure de contact.

Dans l'exemple représenté sur la figure 1, la conduite flexible 10 comporte au moins une paire de couches d'armures externes 38, 40, dont une est représentée sur la figure 1.

En variante, la conduite flexible 10 comporte plusieurs paires de couches d'armures externes 38, 40 superposées les unes sur les autres, par exemple deux paires de couches d'armures externes 38, 40.

Chaque paire comporte une première couche d'armures externes 38, appliquée sur la gaine intermédiaire 24 ou sur une autre paire de couches d'armures externes, et une deuxième couche d'armures externes 38, disposée autour de la première couche d'armures externes 36.

Chaque couche d'armures externes 38, 40 comporte au moins un élément d'armure 44 longitudinal enroulé à pas long autour de l'axe A-A' de la conduite 10.

Par « enroulé à pas long », on entend que la valeur absolue de l'angle d'hélice est inférieure à 60°, et est typiquement comprise entre20° et 60°.

De préférence, dans l'exemple représenté sur la figure 1, la valeur absolue de l'angle d'hélice de chaque couche d'armures externes 34, 36 est supérieure à 45°, et est notamment comprise entre 50° et 60°, et est environ égale à 55°.

Les éléments d'armure 44 d'une première couche 38 sont enroulés généralement suivant un angle opposé par rapport aux éléments d'armure 44 d'une deuxième couche

40. Ainsi, si l'angle d'enroulement des éléments d'armure 44 de la première couche 38 est égal à + α, α étant compris entre 20° et 60°, l'angle d'enroulement des éléments d'armure 44 de la deuxième couche 40 disposée au contact de la première couche 38 est par exemple de - α, avec α compris entre 20° et 60°.

Les éléments d'armure 44 sont par exemple formés par des fils métalliques ou en matériau composite, ou par des rubans.

En variante, les couches d'armures externes 38, 40 sont remplacées par une voûte « externe » de pression formée à partir d'un fil profilé en métal présentant une géométrie en forme de T, de U, de K, de X ou de I, et/ou à partir d'au moins une bande en aramide à résistance mécanique élevée (Technora® ou Kevlar®), et/ou à partir d'au moins une bande composite comprenant une matrice thermoplastique dans laquelle sont noyées des fibres de carbone ou des fibres de verre.

Dans cet exemple, chaque couche d'armures 38, 40 repose sur au moins une bande anti-usure. La bande anti-usure est par exemple réalisée en plastique, notamment à base d'un polyamide ou d'un polyfluorure de vinylidène (PVDF). Elle présente une épaisseur inférieure à l'épaisseur de chaque gaine 20, 22, 24.

Avantageusement, un ruban de maintien est enroulé autour de la deuxième couche d'armures externes 40 la plus à l'extérieur par rapport à l'axe A-A', pour assurer un maintien mécanique des couches d'armures externes 38, 40.

La gaine externe 22 est destinée à protéger l'annulaire 26 en empêchant la pénétration de fluide depuis l'extérieur de la conduite flexible 10 vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 22 est par exemple comprise entre 5 mm et 15 mm.

La réalisation de la conduite 10 va maintenant être décrite.

Initialement, la carcasse 42 est assemblée. La première gaine 20 est formée autour de la carcasse 42, par exemple par extrusion du polymère la constituant.

Puis, la voûte 30 et la frette 32 sont enroulées autour de la première gaine 20. Les couches d'armures internes 34, 36 sont ensuite mises en place autour de la frette 32.

La gaine intermédiaire 24 est alors formée autour des couches d'armures internes 34, 36, avantageusement par extrusion du polymère la constituant.

Les couches d'armures externes 38, 40 sont ensuite mises en place autour de la gaine intermédiaire 24.

La gaine externe 22 est alors formée autour des couches d'armures externes 38, 40, avantageusement par extrusion du polymère la constituant.

Les embouts 190 de la conduite 10 sont alors installés aux extrémités du tronçon central 12. Cette installation obture l'espace annulaire interne 26.

Puis, en fin de fabrication de la conduite 10 et avant de la soumettre à un test d'usine (ou « Factory Acceptance Test » en anglais), le fluide interne est introduit dans l'espace annulaire interne 26 par l'intermédiaire des embouts précédemment installés et au sein desquels est ménagé un canal 200 d'introduction du fluide interne, tel que représenté sur la figure 4.

Une fois la conduite 10 installée dans l'étendue d'eau avantageusement soit par une méthode de remorquage (ou « tow-in laying » en anglais), notamment dans le cas où la conduite comprend une voûte de pression externe enroulée à pas court en remplacement des éléments d'armures 44, ou avantageusement par une méthode de pose à la verticale (ou « vertical laying » en anglais) notamment si la conduite comprend des éléments d'armures 44 enroulées à pas long, et lors de sa mise en service, le fluide interne est confiné dans l'espace 26, à une pression supérieure à 50 bars, avantageusement supérieure à 200 bars, et notamment comprise entre 200 bars et 400 bars.

La mise en pression de l'annulaire interne 26 est maintenue pendant toute la durée de service de la conduite flexible 10, nonobstant des périodes d'arrêt de la production pour effectuer des opérations de maintenance.

Dans l'éventualité où la pressurisation de l'espace annulaire 26 n'est plus assurée, la voûte de pression 30 et la frette 32, enroulées à pas court, sont dimensionnées pour reprendre l'effort radial exercé par la pression de service pendant un temps réduit.

Inversement, si la pression de service chute alors que la pression dans l'espace annulaire 26 est maintenue, la carcasse est dimensionnée pour reprendre l'effort radial d'écrasement exercé.

Lors de l'utilisation de la conduite, du fluide sous pression circule dans le passage interne 16, par exemple à une pression supérieure à 400 bars, notamment comprise entre 700 bars et 1100 bars.

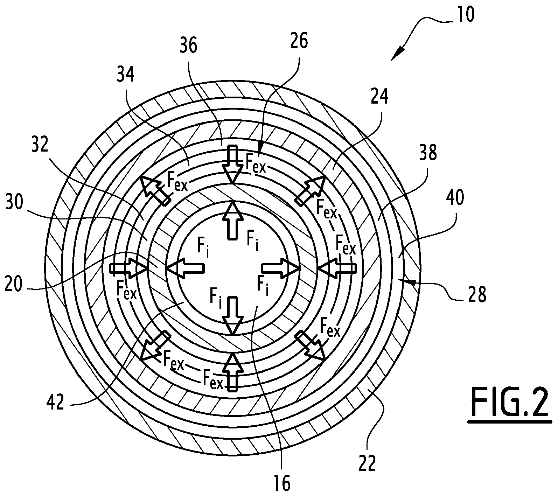

Tel que représenté sur les figures 2 et 4, la présence du fluide interne confiné sous pression de manière permanente dans l'espace annulaire interne 26 compense les efforts de pression radiaux exercés par le fluide circulant dans le passage interne 16.

La flèche intérieure Fi correspond à la pression radiale exercée par le fluide d'hydrocarbures circulant au sein du passage interne 16 de la conduite 10, au niveau de la surface intérieure de la gaine de pression 20. La flèche extérieure Fex correspond à la pression radiale (ou contre-pression) exercée par le fluide interne présent au sein de l'espace annulaire interne 26, au niveau de la surface extérieure de la gaine de pression 20 et de la surface intérieure de la gaine intermédiaire 24.

Les pressions radiales appliquées sur la gaine de pression 20 représentées par les flèches Fi et Fex sont dirigées radialement au centre de la conduite 10 mais de sens opposés.

Ainsi, cela permet de diminuer de manière significative les phénomènes de fatigue et de fatigue par usure de contact (ou « fatigue-fretting » en anglais) pouvant apparaître du fait de la pression très élevée s'appliquant au sein de l'espace annulaire interne 26.

Les couches d'armures externes 38, 40 permettent le maintien en pression de l'espace annulaire interne 26.

Dans une variante, la pression exercée par le fluide interne confiné dans l'espace annulaire interne 26 est ajustable. De la sorte, on peut gérer avec précision les phénomènes de fatigue au cours du temps et donc assurer à la conduite 10 une durée de vie plus longue.

Par ailleurs, le second annulaire ou annulaire externe 28 assure une protection générale à la conduite, notamment en ce qui concerne la reprise des efforts circonférentiels ("hoop-stress") générés au niveau de l'espace annulaire interne 26. La conduite 10 peut notamment être utilisée pour réinjecter un fluide sous très haute pression, tel qu'un gaz riche en dioxyde de carbone dans le sous-sol.

Dans tout ce qui précède, les valeurs de pression ont été mentionnées en référence à une conduite de diamètre environ égal à 152 mm.

## Revendications

1. Conduite flexible (10) de transport de fluide, comprenant :
- une gaine interne (20) en polymère définissant un passage interne (16) de circulation d'un fluide transporté ;
- au moins une couche (34, 36) d'armures internes, disposée à l'extérieur de la gaine interne (20) ;
- une gaine externe (22) de protection en polymère, disposée à l'extérieur de chaque couche (34, 36) d'armures internes ;
- un fluide interne, reçu entre la gaine interne (20) et la gaine externe (22) ;
**caractérisée en ce que** la conduite comporte une gaine intermédiaire (24) en polymère, interposée entre la gaine interne (20) et la gaine externe (22), la gaine intermédiaire (24) et la gaine interne (20) délimitant entre elles un espace annulaire interne (26) de réception du fluide interne,
le fluide interne étant confiné dans l'espace annulaire interne (26) à une pression supérieure à 50 bars.

2. Conduite (10) selon la revendication 1, **caractérisée en ce que** le fluide interne est confiné dans l'espace annulaire interne (26) à une pression supérieure à 200 bars, et notamment comprise entre 200 bars et 400 bars.

3. Conduite (10) selon l'une quelconque des revendications précédentes, **caractérisée en ce qu'**elle comprend, dans l'espace annulaire interne (26), une voûte de pression (30) comportant au moins un fil enroulé autour de la gaine interne, et optionnellement une frette (32), disposée autour de la voûte de pression (30).

4. Conduite (10) selon l'une quelconque des revendications précédentes, **caractérisée en ce que** le fil présente un profil en Z.

5. Conduite (10) selon l'une quelconque des revendications 1 à 3, **caractérisée en ce que** le fil présente un profil en T, en K, en U, en X ou en I.

6. Conduite (10) selon l'une quelconque des revendications 1 à 2, **caractérisée en ce qu'**elle comprend, dans l'espace annulaire interne (26), au moins une voûte comportant au moins une bande en aramide à résistance mécanique élevée et/ou au moins une bande en composite comprenant une matrice thermoplastique dans laquelle sont noyées des fibres de carbone ou de verre.

7. Conduite (10) selon l'une quelconque des revendications précédentes, **caractérisée en ce que** la ou chaque couche d'armures internes (34, 36) est disposée dans l'espace annulaire interne (26).

8. Conduite (10) selon l'une quelconque des revendications précédentes, **caractérisée en ce que** la ou chaque couche d'armures internes (34, 36) est enroulée avec un angle d'hélice inférieur à 45° en valeur absolue, notamment compris entre 20° et 45° en valeur absolue.

9. Conduite (10) selon l'une quelconque des revendications précédentes, **caractérisée en ce qu'**elle comporte au moins une couche d'armures externes (38, 40), disposée entre la gaine intermédiaire (24) et la gaine externe (22).

10. Conduite (10) selon la revendication 9, **caractérisée en ce que** la ou chaque couche d'armures externes (38, 40) est enroulée avec un angle d'hélice supérieur à 45° en valeur absolue, notamment compris entre 50° et 60° en valeur absolue.

11. Conduite (10) selon la revendication 9 ou 10, **caractérisée en ce qu'**elle comporte une voûte externe disposée entre la gaine intermédiaire (24) et la gaine externe (22), la voûte externe comprenant un fil de forme métallique ou/et une bande à résistance mécanique élevée ou/et une bande composite

12. Conduite (10) selon l'une quelconque des revendications 9 à 11, **caractérisée en ce qu'**elle comporte une bande de maintien externe de la ou de chaque couche d'armures externes (38, 40) disposée entre la couche d'armures externes (38, 40) et la gaine externe (22).

13. Conduite (10) selon l'une quelconque des revendications précédentes, **caractérisée en ce qu'**elle comporte une carcasse interne (42), disposée dans la gaine interne (20), la carcasse interne (42) étant avantageusement formée d'un feuillard métallique agrafé.

14. Utilisation d'une conduite (10) selon l'une quelconque des revendications précédentes pour le transport, dans le passage interne (16), d'un fluide à une pression supérieure à 400 bars, notamment supérieure à 700 bars.

15. Procédé de réalisation d'une conduite flexible (10), comportant les étapes suivantes :
- fourniture d'une gaine interne (20) en polymère, la gaine interne (20) définissant un passage interne (16) de circulation d'un fluide transporté ;
- disposition d'au moins une couche d'armures internes (34, 36) de traction à l'extérieur de la gaine interne (20) ;
- disposition d'une gaine externe (22) de protection en polymère, à l'extérieur de la couche d'armures internes (34, 36) ;
- injection d'un fluide interne entre la gaine interne (20) et la gaine externe (22) ;
**caractérisée en ce qu'**il comporte l'interposition d'une gaine intermédiaire (24) en polymère, entre la gaine interne (20) et la gaine externe (22), la gaine intermédiaire (24) et la gaine interne (20) délimitant entre elles un espace annulaire interne (26) de réception du fluide interne,
le procédé comportant le confinement du fluide interne dans l'espace annulaire interne (26) à une pression supérieure à 50 bars.

## Patentansprüche

1. Flexible Fluidtransportleitung (10), die Folgendes umfasst:
- eine innere Hülle (20) aus Polymer, die einen inneren Durchlass (16) für die Zirkulation eines transportierten Fluids definiert;
- wenigstens eine Schicht (34, 36) aus inneren Bewehrungen, die außerhalb der inneren Hülle (20) angeordnet ist;
- eine äußere Schutzhülle (22) aus Polymer, die außerhalb jeder Schicht (34, 36) von inneren Bewehrungen angeordnet ist;
- ein inneres Fluid, das zwischen der inneren Hülle (20) und der äußeren Hülle (22) aufgenommen wird;
**dadurch gekennzeichnet, dass** die Leitung eine Zwischenhülle (24) aus Polymer umfasst, die zwischen die innere Hülle (20) und die äußere Hülle (22) eingefügt ist, wobei die Zwischenhülle (24) und die innere Hülle (20) zwischen sich einen inneren ringförmigen Raum (26) für die Aufnahme des inneren Fluids begrenzen,
wobei das innere Fluid in den inneren ringförmigen Raum (26) unter einem Druck von mehr als 50 Bar eingeschlossen ist.

2. Leitung (10) nach Anspruch 1, **dadurch gekennzeichnet, dass** das innere Fluid in den inneren ringförmigen Raum (26) unter einem Druck von mehr als 200 Bar und insbesondere unter einem Druck im Bereich von 200 Bar bis 400 Bar eingeschlossen ist.

3. Leitung (10) nach einem der vorhergehenden Ansprüche, **dadurch gekennzeichnet, dass** sie in dem inneren ringförmigen Raum (26) eine Druckwölbung (30) aufweist, die wenigstens einen um die innere Hülle gewickelten Draht umfasst, und optional eine Bandage (32), die um die Druckwölbung (30) angeordnet ist, aufweist.

4. Leitung (10) nach einem der vorhergehenden Ansprüche, **dadurch gekennzeichnet, dass** der Draht ein Z-förmiges Profil aufweist.

5. Leitung (10) nach einem der Ansprüche 1 bis 3, **dadurch gekennzeichnet, dass** der Draht ein T-, K-, U-, X oder I-förmiges Profil aufweist.

6. Leitung (10) nach einem der Ansprüche 1 bis 2, **dadurch gekennzeichnet, dass** sie in dem inneren ringförmigen Raum (26) wenigstens eine Wölbung aufweist, die wenigstens ein Aramidband mit hohem mechanischem Widerstand und/oder wenigstens ein Verbundwerkstoffband, das einen thermoplastischen Grundstoff enthält, in den Kohlenstoff- oder Glasfasern eingebettet sind, umfasst.

7. Leitung (10) nach einem der vorhergehenden Ansprüche, **dadurch gekennzeichnet, dass** die oder jede Schicht (34, 36) von inneren Bewehrungen in dem inneren ringförmigen Raum (26) angeordnet ist.

8. Leitung (10) nach einem der vorhergehenden Ansprüche, **dadurch gekennzeichnet, dass** die oder jede Schicht (34, 36) von inneren Bewehrungen unter einem Schrägungswinkel mit einem Absolutwert von weniger als 45°, insbesondere mit einem Absolutwert im Bereich von 20° bis 45°, gewickelt ist.

9. Leitung (10) nach einem der vorhergehenden Ansprüche, **dadurch gekennzeichnet, dass** sie wenigstens eine Schicht (38, 40) von äußeren Bewehrungen umfasst, die zwischen der Zwischenhülle (24) und der äußeren Hülle (22) angeordnet ist.

10. Leitung (10) nach Anspruch 9, **dadurch gekennzeichnet, dass** die oder jede Schicht (38, 40) von äußeren Bewehrungen unter einem Schrägungswinkel mit einem Absolutwert von mehr als 45°, insbesondere mit einem Absolutwert im Bereich von 50° bis 60°, gewickelt ist.

11. Leitung (10) nach Anspruch 9 oder 10, **dadurch gekennzeichnet, dass** sie eine Außenwölbung aufweist, die zwischen der Zwischenhülle (24) und der äußeren Hülle (22) angeordnet ist, wobei die Außenwölbung einen Draht mit metallischer Form und/oder ein Band mit hohem mechanischem Widerstand und/oder ein Verbundwerkstoffband umfasst.

12. Leitung (10) nach einem der Ansprüche 9 bis 11, **dadurch gekennzeichnet, dass** sie ein äußeres Halteband für die oder jede Schicht (38, 40) von äußeren Bewehrungen, die zwischen der Schicht (38, 40) von äußeren Bewehrungen und der Außenhülle (22) angeordnet ist, umfasst.

13. Leitung (10) nach einem der vorhergehenden Ansprüche, **dadurch gekennzeichnet, dass** sie eine innere Karkasse (42) umfasst, die in der Innenhülle (20) angeordnet ist, wobei die innere Karkasse (42) vorteilhaft aus einem mit Haken versehenen Metallband gebildet ist.

14. Verwendung einer Leitung (10) nach einem der vorhergehenden Ansprüche, um in dem inneren Durchlass (16) ein Fluid zu transportieren, das mit einem Druck von mehr als 400 Bar, insbesondere mehr als 700 Bar beaufschlagt ist.

15. Verfahren zur Herstellung einer flexiblen Leitung (10), das die folgenden Schritte umfasst:
- Bereitstellen einer inneren Hülle (20) aus Polymer, wobei die innere Hülle (20) einen inneren Durchlass (16) für die Zirkulation eines transportierten Fluids definiert;
- Anordnen wenigstens einer Traktionsschicht (34, 36) von inneren Bewehrungen außerhalb der inneren Hülle (20);
- Anordnen einer äußeren Schutzhülle (22) aus Polymer außerhalb der Schicht (34, 36) von inneren Bewehrungen;
- Einleiten eines inneren Fluids zwischen die innere Hülle (20) und die äußere Hülle (22);
**dadurch gekennzeichnet, dass** es das Einfügen einer Zwischenhülle (24) aus Polymer zwischen die innere Hülle (20) und die äußere Hülle (22) umfasst, wobei die Zwischenhülle (24) und die innere Hülle (20) zwischen sich einen inneren ringförmigen Raum (26) für die Aufnahme des inneren Fluids begrenzen,
wobei das Verfahren das Einschließen des inneren Fluids in dem inneren ringförmigen Raum (26) unter einem Druck von mehr als 50 Bar umfasst.

## Claims

1. A flexible pipe (10) for conveying a fluid, comprising:
- an inner polymer sheath (20) defining an inner passage (16) for the circulation of a conveyed fluid;
- at least one layer (34, 36) of inner armours, arranged outside the inner sheath (20);
- a polymer outer protection sheath (22), positioned outside each layer (34, 36) of inner armours;
- an inner fluid, received between the inner sheath (20) and the outer sheath (22);
**characterized in that** the pipe includes an intermediate polymer sheath (24), interposed between the inner sheath (20) and the outer sheath (22), the intermediate sheath (24) and the inner sheath (20) delimiting an inner annular space (26) between them for receiving the inner fluid,
the inner fluid being confined in the inner annular space (26) at a pressure above 50 bars.

2. The pipe (10) according to claim 1, **characterized in that** the inner fluid is confined in the inner annular space (26) at a pressure above 200 bars, and in particular comprised between 200 bars and 400 bars.

3. The pipe (10) according to any one of the preceding claims, **characterized in that** it comprises, in the inner annular space (26), a pressure vault (30) including at least one wire wound around the inner sheath, and optionally a hoop layer (32), positioned around the pressure vault (30).

4. The pipe (10) according to any one of the preceding claims, **characterized in that** the wire has a Z-shaped profile.

5. The pipe (10) according to any one of claims 1 to 3, **characterized in that** the wire has a T-, K-, U-, X- or I-shaped profile.

6. The pipe (10) according to any one of claims 1 to 2, **characterized in that** it comprises, in the inner annular space (26), at least one vault including at least one aramid strip with a high mechanical strength and/or at least one composite strip comprising a thermoplastic matrix and in which carbon or glass fibers are embedded.

7. The pipe (10) according to any one of the preceding claims, **characterized in that** the or each layer of inner armours (34, 36) is positioned in the inner annular space (26).

8. The pipe (10) according to any one of the preceding claims, **characterized in that** the or each layer of outer armours (34, 36) is wound with a spiral angle larger than 45° in absolute value, in particular comprised between 20° and 45° in absolute value.

9. The pipe (10) according to any one of the preceding claims, **characterized in that** it includes at least one layer of outer armours (38, 40), positioned between the intermediate sheath (24) and the outer sheath (22).

10. The pipe (10) according to claim 9, **characterized in that** the or each layer of outer armours (38, 40) is wound with a spiral angle larger than 45° in absolute value, in particular comprised between 50° and 60° in absolute value.

11. The pipe (10) according to claim 9 or 10, **characterized in that** it includes an outer vault positioned between the intermediate sheath (24) and the outer sheath (22), the outer sheath comprising a metal wire and/or a high-strength strip and/or a composite strip.

12. The pipe (10) according to any one of claims 9 to 11, **characterized in that** it includes an outer maintaining strip for the or each layer of outer armours (38, 40) positioned between the layer of outer armours (38, 40) and the outer sheath (22).

13. The pipe (10) according to any one of the preceding claims, **characterized in that** it includes an inner carcass (42), positioned in the inner sheath (20), the inner carcass (42) advantageously being formed from an interlocked metal sheet.

14. A use of a pipe (10) according to any one of the preceding claims for conveying, in the inner passage (16), a fluid at a pressure above 400 bars, in particular above 700 bars.

15. A method for producing a flexible pipe (10), including the following steps:
- providing an inner polymer sheath (20), the inner sheath (20) defining an inner passage (16) for the circulation of a conveyed fluid;
- arranging at least one layer of the inner tensile armours (34, 36) outside the inner sheath (20);
- arranging an outer polymer protection sheath (22), outside the layer of inner armours (34, 36);
- injecting an inner fluid between the inner sheath (20) and the outer sheath (22);
**characterized in that** it includes the interposition of an intermediate polymer sheath (24), between the inner sheath (20) and the outer sheath (22), the intermediate sheath (24) and the inner sheath (20) delimiting an inner annular space (26) between them for receiving the inner fluid,
the method including confining the inner fluid in the inner annular space (26) at a pressure above 50 bars.
